# EUROPEAN PATENT SPECIFICATION

(11) **EP 2 803 955 B1**
(45) Date of publication and mention of the grant of the patent: **13.09.2017**
(21) Application number: 14168052.0
(22) Date of filing: 13.05.2014
(51) Int. Cl.: G01F 23/296

(54) **Ultrasonic liquid level sensing systems**
Ultraschall-Flüssigkeitsstandmesssysteme
Systèmes de détection de niveau de liquide ultrasonore

(30) Priority: 15.05.2013 US 201361823625 P; 24.01.2014 US 201414163407; 24.01.2014 US 201414163518
(43) Date of publication of application: 19.11.2014
(73) Proprietor: AIR PRODUCTS AND CHEMICALS, INC., Allentown, PA 18195-1501 (US)
(72) Inventor: Birtcher, Charles Michael, Valley Center, CA California 92082 (US); Steidl, Thomas Andrew, Escondido, CA California 92025 (US)
(74) Representative: Beck Greener

(56) References cited:
- EP-A2- 0 465 878
- EP-A2- 0 745 833
- WO-A2-2009/063194
- DE-A1- 10 159 359
- US-B1- 6 246 154

## Description

### BACKGROUND OF THE INVENTION

Semiconductor manufacturing processes involve the use of chemical reagents that must meet strict purity requirements. These liquid chemical reagents are typically contained in sealed containers (e.g., ampoules) to protect against contamination of the chemical reagents and to prevent leakage. The chemical reagents typically require metal containers and container fittings that use metal-on-metal seals to avoid corrosion, contamination, and leakage under elevated pressures. When using a chemical reagent stored in such a container, it is often necessary to be able to determine the amount of chemical reagent left in the container without exposing the chemical reagent to the environment or exposing an operator to the chemical reagent.

Ultrasonic probes are commonly used in the semiconductor industry to measure the level of chemical reagent within a sealed container. A typical design includes multiple ultrasonic sensors positioned in a series along the length of a conduit within the probe, such as the sensors and configuration disclosed in U.S. Patent No. 5,663,503 to Dam et al. A signal processing device (e.g., a controller, meter, personal computer, etc.) transmits electronic signals to the ultrasonic sensors, which in turn generate bursts of sound waves that pass through the conduit and echo back to the sensors. Each sensor converts the echoed waves it receives into electronic signals that are transmitted back to the signal processing device. The signal processing device then interprets the electronic signals to determine the intensity of the echoed waves as well as the time that elapsed between emission and the arrival of the echoed waves. For each sensor positioned along a particular portion of the conduit, the speed with which the ultrasonic waves travel through the conduit and the intensity of the echoed ultrasonic wave will differ depending on whether that portion of the conduit contains chemical reagent or gas or vapor (i.e., sound travels faster through a liquid medium as compared to gas or vapor). In this manner, the signal processing device can determine the level of the chemical reagent along the length of the conduit and therefore the amount of chemical reagent within the container.

Generally, a greater number of ultrasonic sensors disposed within the ultrasonic probe translates into increased accuracy in measuring chemical reagent levels. However, a larger probe is typically required to accommodate the increased number of ultrasonic sensors and their wiring. Given the exacting nature of semiconductor manufacturing processes and environments, the dimensions of sealed containers, container fittings, seals, and related hardware are largely standardized, which limits the extent to which the ultrasonic probes can be adapted to include a greater number of ultrasonic sensors (e.g., greater than four) without requiring a change to larger fittings and/or non-standardized components.

WO 2009/063194 A2 discloses an ultrasonic probe for use with a container, the ultrasonic probe comprising two barrels that comprise internal volumes, in each of which a plurality of ultrasonic sensors is disposed. Accordingly, there is a need in the art for an ultrasonic probe having an increased number of ultrasonic sensors that can be used with existing, standardized container fittings.

### SUMMARY OF THE INVENTION

According to the present invention, an ultrasonic probe for use in level sensing within a container is disclosed according to claim 1.

### BRIEF DESCRIPTION OF THE DRAWINGS

The present invention will hereinafter be described in conjunction with the appended drawing figures wherein like numerals denote like elements.
Figure 1A is an exploded perspective view of an ultrasonic probe in accordance with an exemplary embodiment of the present invention;
Figure 1B is a non-exploded sectional view, taken along line 1B-1B, of the ultrasonic probe of Figure 1A;
Figure 2A is a perspective view of the ultrasonic probe of Figures 1A and 1B installed on a container in accordance with an exemplary embodiment of the present invention;
Figure 2B is an enlarged, partial sectional view, taken along line 2B-2B, of portions of the ultrasonic probe and container shown within the dashed-line area of Figure 2A;
Figure 3A is an exploded perspective view of an ultrasonic probe in accordance with another exemplary embodiment of the present invention; and
Figure 3B is a non-exploded sectional view, taken along line 3B-3B, of the ultrasonic probe of Figure 3A.
Figure 4A is an exploded perspective view of certain components of the ultrasonic probe of Figures 3A and 3B.
Figure 4B is a non-exploded perspective view of the components of the ultrasonic probe shown in Figure 4A.

### DETAILED DESCRIPTION OF THE PREFERRED EMBODIMENTS

The ensuing detailed description provides preferred exemplary embodiments only, and is not intended to limit the scope, applicability, or configuration of the invention. Rather, the ensuing detailed description of the preferred exemplary embodiments will provide those skilled in the art with an enabling description for implementing the preferred exemplary embodiments of the invention. Various changes may be made in the function and arrangement of elements without departing from the scope of the invention, as set forth in the appended claims.

In the figures, elements that are similar to those of other embodiments of the present invention are represented by reference numerals increased by a value of 100. Such elements should be regarded as having the same function and features unless otherwise stated or depicted herein, and the discussion of such elements may therefore not be repeated for multiple embodiments.

The term "conduit," as used in the specification and claims, refers to one or more structures through which fluids can be transported between two or more components of a system. For example, conduits can include pipes, ducts, passageways, and combinations thereof that transport liquids, vapors, and/or gases.

The term "flow communication," as used in the specification and claims, refers to the nature of connectivity between two or more components that enables liquids, vapors, and/or gases to be transported between the components in a controlled fashion (i.e., without leakage). Coupling two or more components such that they are in flow communication with each other can involve any suitable method known in the art, such as with the use of welds, flanged conduits, gaskets, and bolts. Two or more components may also be coupled together via other components of the system that may separate them.

In order to aid in describing the invention, directional terms may be used in the specification and claims to describe portions of the present invention (e.g., upper, lower, left, right, etc.). These directional terms are merely intended to assist in describing and claiming the invention, and are not intended to limit the invention in any way. In addition, reference numerals that are introduced in the specification in association with a drawing figure may be repeated in one or more subsequent figures without additional description in the specification in order to provide context for other features.

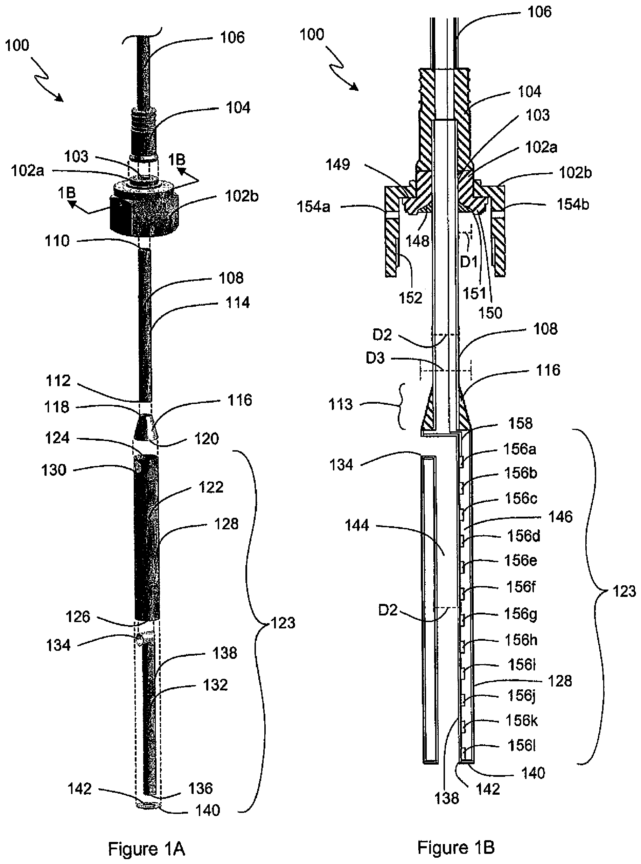

Figures 1A and 1B show an ultrasonic probe 100 in accordance with an exemplary embodiment of the present invention. More specifically, Figure 1A shows an exploded perspective view of the ultrasonic probe 100 and Figure 1B shows a non-exploded sectional view of the ultrasonic probe 100 taken along line 1B-1B of Figure 1A.

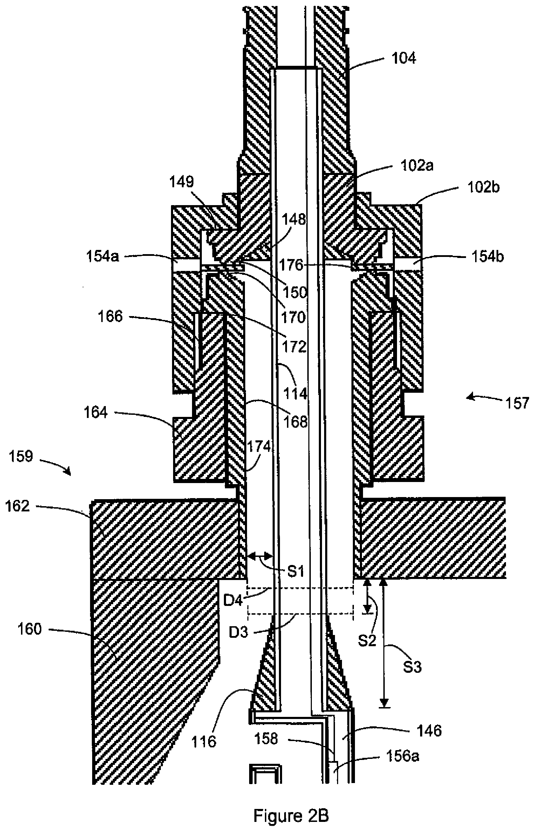

The ultrasonic probe 100 comprises seal fitting members 102a and 102b, a flexible connector 104, a cable sheath 106, a neck tube 108 having a shoulder portion 113, and a barrel 123. As discussed in greater detail herein, the seal fitting members 102a and 102b are portions of a seal fitting assembly 157 (see also Figure 2B) that secures the ultrasonic probe 100 to a container 159. In this exemplary embodiment, the seal fitting assembly 157 is a face seal fitting assembly, where the seal fitting member 102a is a face seal fitting gland having a through hole 103 and the seal fitting member 102b is a standard sized face seal fitting having a three-quarter-inch (19.1 mm) hex nut. In this embodiment, the seal fitting member 102b rests on a lip 149 of the seal fitting member 102a and can be rotated relative to the seal fitting member 102a about an axis drawn through the through hole 103. In alternative embodiments, as will be apparent to those of ordinary skill in the art, the seal fitting members 102a and 102b can have other dimensions and features, such as a longer gland, a half-inch (12.7 mm) or a non-standard size face seal fitting, and/or a seal fitting member 102b that is bonded to the seal fitting member 102a. Similarly, other types of fittings can be used for seal fitting assembly 157, such as, for example, a surface mount C-seal.

The seal fitting member 102a is coupled to the flexible connector 104 and the cable sheath 106. The neck tube 108 comprises an upper end 110 that defines an upper opening, a lower end 112 that defines a lower opening, and a sidewall 114. In this embodiment, the shoulder portion 113 of the neck tube 108 comprises a shoulder tube 116 having an upper end 118 that defines an upper opening and a lower end 120 that defines a lower opening. The shoulder tube 116 is conical in shape and provides a smooth transition from the neck tube 108 to the outer tube 122 of the barrel 123. The lower end 112 of the neck tube 108 is disposed within the shoulder tube 116 and the shoulder tube 116 is coupled to the sidewall 114 of the neck tube 108. In other embodiments, the entire neck tube 108, including the shoulder portion 113, can be formed of a single unitary part. The upper end 110 of the neck tube 108 is disposed within the through hole 103 of the seal fitting member 102a and within the flexible connector 104. The barrel 123 comprises an outer tube 122, an inner tube 132, and a disc cap 140. The outer tube 122 has an upper end 124 that defines an upper opening, a lower end 126 that defines a lower opening, a sidewall 128, and a through hole 130 disposed in the sidewall 128 near the upper end 124. The upper end 124 of the outer tube 122 is coupled to the lower end 120 of the shoulder tube 116.

The inner tube 132 comprises an upper end 134 that defines an upper opening, a lower end 136 that defines a lower opening, and a sidewall 138. In this exemplary embodiment, the upper end 134 defines an upper opening that is approximately perpendicular to the lower opening defined by the lower end 136. The inner tube 132 defines a conduit 144 (see Figure 1B). In should be understood that, in other embodiments of the invention, the conduit may not be fully enclosed, as is the case with ultrasonic probe 100. For example, in a probe having a "tuning fork" style barrel (i.e., having two spaced-apart members extending downwardly) the conduit could comprise a space located between the two spaced-apart members.

The disc cap 140 comprises an inner rim 142 that defines an opening. In an assembled configuration, the entirety of the inner tube 132 is disposed within the outer tube 122, the upper end 134 of the inner tube 132 is aligned with the through hole 130 disposed in the sidewall 128, and the lower end 136 of the inner tube 132 is aligned with the lower end 126 of the outer tube 122. The upper end 134 of the inner tube 132 is coupled to the sidewall 128. The disc cap 140 is coupled to the lower end 126 of the outer tube 122 and the lower end 136 of the inner tube 132, thereby coupling the lower end 126 of the outer tube 122 to the lower end 136 of the inner tube 132.

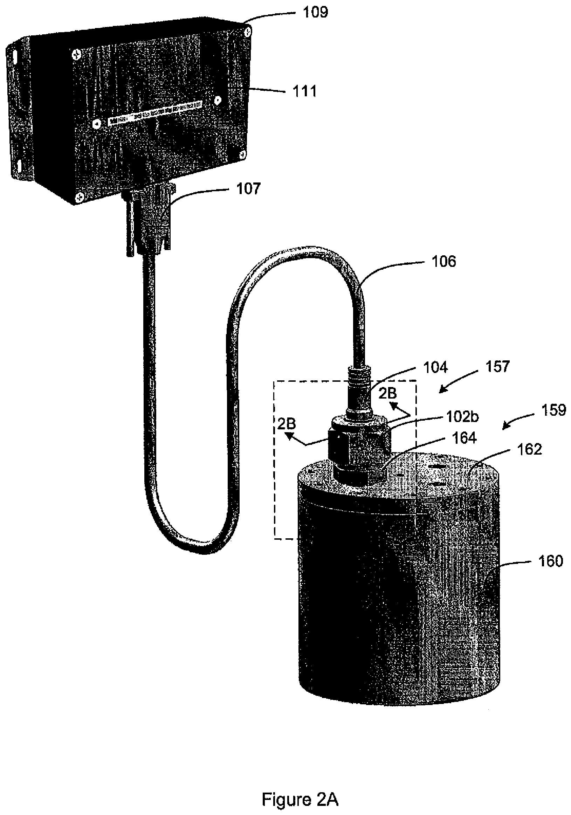

The conduit 144 is disposed within the barrel 123 and has a lower opening defined by the lower end 136 of the inner tube 132 (the lower opening can also be regarded as being defined by the inner rim 142 of the disc cap 140) (see Figure 1B). When the barrel 123 is inserted into a container (see container 159 of Figures 2A and 2B), the conduit 144 is in flow communication with the internal volume of the container that holds liquid such that the liquid can flow through the conduit 144.

The sidewall 128 of the outer tube 122 and the sidewall 138 of the inner tube 132 define an internal volume 146 (i.e., a compartment) therebetween that is also bounded by the disc cap 140, as shown. The internal volume 146 is isolated from the conduit 144 (i.e., the internal volume 146 is not in flow communication with the conduit 144) such that any liquid flowing through the conduit 144 cannot enter the internal volume 146.

A plurality of ultrasonic sensors 156 is disposed within the internal volume 146 of the barrel 123. In this exemplary embodiment, the plurality of ultrasonic sensors 156 includes twelve (12) ultrasonic sensors 156a through 156l that are coupled to the sidewall 138 of the inner tube 132. In this embodiment, each of the plurality of ultrasonic sensors 156 is bonded to the sidewall 138 with an epoxy. Other suitable means for coupling can also be used, such as double-sided tape or other adhesives. In other embodiments, the plurality of ultrasonic sensors 156 can include a greater or lesser number of sensors. Preferably the plurality of ultrasonic sensors 156 includes at least 5 ultrasonic sensors. The plurality of ultrasonic sensors 156 can be implemented with any suitable ultrasonic sensors that are known to those of ordinary skill in the art, such as, for example, piezoelectric crystals. Each ultrasonic sensor of the plurality of ultrasonic sensors 156 is oriented to emit sound waves through the sidewall 138 and the conduit 144 (and any liquid present therein) and detect the sound waves that are echoed back. Each ultrasonic sensor of the plurality of ultrasonic sensors 156 includes wiring 158 (comprising at least one wire) that extends from the internal volume 146, through the neck tube 108, and through the cable sheath 106. The wiring 158 is terminated at a connector 107 that is plugged into a controller 109 (see Figure 2A).

The controller 109 is a programmable data processing device that transmits electronic signals to the plurality of ultrasonic sensors 156, receives electronic signals from the plurality of ultrasonic sensors 156, and determines the level of liquid within a container into which the ultrasonic probe 100 is inserted. In this embodiment, the controller 109 comprises one or more microprocessors (not shown), a power supply (not shown), at least one input/output port (not shown) to receive the connector 107, and a light-emitting-diode (LED) meter 111 that provides a visual indication of the amount of liquid within the container. In alternative embodiments, the controller 109 can include other input/output ports and/or other aural and visual mechanisms for indicating the level of liquid within the container. Similarly, the controller 109 may be implemented with any type of programmable data processing device, including a personal computer executing control software.

For each ultrasonic sensor of the plurality of ultrasonic sensors 156, the controller 109 transmits an electronic signal (i.e., a pulse) to the ultrasonic sensor via the wiring 158, which causes the ultrasonic sensor to emit sound waves (i.e., the piezoelectric crystal oscillates). The ultrasonic sensor then receives echoed sound waves and converts the echoed waves into an electronic signal that is transmitted back to the controller 109 via the wiring 158. As previously discussed, the controller 109 interprets the intensity of the received signal as well as the time that elapsed between sending the electronic signal to the ultrasonic sensor and receiving the electronic signal from the ultrasonic sensor to determine whether there is liquid at the portion of the conduit 144 at which that particular sensor is disposed. Accordingly, by using the plurality of ultrasonic sensors 156, the controller 109 can determine the level of liquid along the length of the conduit 144 and therefore the amount of liquid within the container into which the barrel 123 is inserted. Each sensor of the plurality of ultrasonic sensors 156 is represented by an LED in the LED meter 111 to provide a visual indication of the amount of liquid within the container (e.g., each LED is illuminated only when liquid is detected by a particular sensor).

The controller 109 can be programmed to transmit signals to, and receive signals from, less than all of the ultrasonic sensors 156a through 156l of the plurality of ultrasonic sensors 156 at the same time. This feature eliminates the need for the wiring 158 for the plurality of ultrasonic sensors 156 to be individually shielded and also allows the ultrasonic sensors 156a through 1561 to be disposed closer together. In prior art systems, the wiring that connects the ultrasonic sensors to a controller is typically individually shielded to protect against interference (i.e., crosstalk) that results from electronic signals being transmitted to and from all of the ultrasonic sensors in the probe at the same time. For example, the wiring for each ultrasonic sensor in a typical prior art design may include a coaxial cable in which the inner conductor serves as the signal line to the ultrasonic sensor and the outer shield serves as the ground (e.g., grounded to a steel tube of the probe) and the signal return from the ultrasonic sensor. In prior art systems, the ultrasonic sensors within the probe must also be spaced further apart to avoid interference that results from the ultrasonic sensors simultaneously emitting sound waves. Each of these characteristics (i.e., added bulk from multiple shielded cables and greater spacing between sensors) limits the number of ultrasonic sensors that can be disposed in a probe without increasing the size of the probe and related hardware.

In a preferred embodiment, the controller 109 is programmed or otherwise operatively configured to transmit signals to, and receive signals from, one ultrasonic sensor of the plurality of ultrasonic sensors 156 at a time. For example, the controller 109 can be programmed to first transmit an electronic signal to the ultrasonic sensor 156a and await receipt of the return signal from the ultrasonic sensor 156a, then transmit an electronic signal to the ultrasonic sensor 156b and await receipt of the return signal from the ultrasonic sensor 156b, and so on for each ultrasonic sensor of the plurality of ultrasonic sensors 156. Upon having transmitted an electronic signal to, and received an electronic signal from, each of the plurality of ultrasonic sensors 156 a first time (in this embodiment, beginning with ultrasonic sensor 156a and ending with ultrasonic sensor 156l), the controller 109 repeats the sequence and transmits an electronic signal to, and receives an electronic signal from, the ultrasonic sensor 156a and each of the plurality of ultrasonic sensors 156 a second time, and so on for as long as the ultrasonic probe 100 is being operated. In this manner, the potential for interference between the wiring 158 for each ultrasonic sensor 156a through 156l and between the ultrasonic sensors themselves is greatly reduced or eliminated because the ultrasonic sensors 156a through 156l are not all simultaneously emitting or receiving sound waves and the wiring 158 for each of the ultrasonic sensors 156a through 156l is not simultaneously carrying electronic signals. This method of operating the plurality of ultrasonic sensors 156 eliminates the need for the wiring 158 for each ultrasonic sensor 156a through 156l to be individually shielded and the ultrasonic sensors 156a through 156l can be disposed closer together (i.e., even closer than is shown in Figure 1B), both of which enable a greater number of ultrasonic sensors to be disposed within the barrel 123. In an exemplary configuration, the wiring 158 comprises a multi conductor shielded cable having a plurality of inner conductors that are not individually shielded, where a separate inner conductor is connected to each ultrasonic sensor of the plurality of ultrasonic sensors 156 to serve as the signal line, and an outer shield of the multi conductor shielded cable serves as a common return line and ground for all of the ultrasonic sensors of the plurality of ultrasonic sensors 156. For example, a coaxial cable can be used as the multi conductor shielded cable, where the inner conductors are connected to the plurality of ultrasonic sensors 156 to serve as the signal lines, and the outer shield of the coaxial cable serves as the common return line.

The neck tube 108 is disposed within the seal fitting members 102a and 102b and the flexible connector 104. The neck tube 108 is secured to the seal fitting member 102a by a fusion weld (i.e., a bead) made within the weld zone 148. Preferably, the weld occupies only a portion of the weld zone 148 and is made where the sidewall 114 of the neck tube 108 abuts the seal fitting member 102a. The seal fitting member 102a includes a protruding sealing surface (i.e., a seal face) 150 that extends around the neck tube 108. The protruding sealing surface 150 has an inner edge 151 that is separated from the sidewall 114 of the neck tube 108 by a distance D1. In order to prevent impairment of the protruding sealing surface 150 by a weld within the weld zone 148 (e.g., welding material can create a raised surface and/or the heat of welding can deform the protruding sealing surface 150), distance D1 is preferably at least 2.0 mm and, more preferably, at least 6.0 mm. The seal fitting member 102b includes a threaded region 152 that engages an opposite threaded region 166 of another seal fitting member 164 (see Figure 2B) of the seal fitting assembly 157, as discussed later in this specification. Testing ports 154a and 154b are used for leak detection when the ultrasonic probe 100 is secured to the container 159, as discussed in greater detail with regard to Figure 2B.

The barrel 123 has an outer diameter D3 (i.e., the outer diameter of the outer tube 122). The neck tube 108 and the inner tube 132 have an outer diameter D2 that is less than the outer diameter D3 of the barrel 123. The larger outer diameter D3 of the barrel 123 relative to the outer diameter D2 of the inner tube 132 provides an increased amount of space within the internal volume 146 that is necessary to house the increased number of ultrasonic sensors 156a through 156l and their respective wiring 158. Preferably, the ratio of the outer diameter D2 of the inner tube 132 to the outer diameter D3 of the barrel 123 is less than or equal to 0.95. More preferably, the ratio of the outer diameter D2 of the inner tube 132 to the outer diameter D3 of the barrel 123 is less than or equal to 0.95 and greater than or equal to 0.3. More preferably, the ratio of the outer diameter D2 of the inner tube 132 to the outer diameter D3 of the barrel 123 is less than or equal to 0.8, and the outer diameter D3 of the barrel 123 is no greater than 0.827 inches (21.0 mm). More preferably, the ratio of the outer diameter D2 of the inner tube 132 to the outer diameter D3 of the barrel 123 is less than or equal to 0.8 and greater than or equal to 0.4. More preferably, the outer diameter D2 of the inner tube 132 is approximately five-sixteenths of an inch (7.9 mm), and the outer diameter D3 of the barrel 123 is approximately five-eighths of an inch (15.9 mm). Preferably, there exists a minimum distance between the sidewall 128 of the outer tube 122 and the sidewall 138 of the inner tube 132 of at least 0.10 inches (2.5 mm) where the plurality of ultrasonic sensors 156 includes four ultrasonic sensors, and a minimum distance of at least 0.15 inches (3.8 mm) where the plurality of ultrasonic sensors 156 includes the twelve (12) ultrasonic sensors 156a through 156l.

Figure 2A shows a perspective view of the ultrasonic probe 100 installed on a container 159 in accordance with an exemplary embodiment of the present invention. The ultrasonic probe 100 includes the controller 109 and the LED meter 111, as previously discussed. The container 159 comprises a body 160, an upper portion 162, and a seal fitting member 164 coupled to the upper portion 162. As will be apparent to those of ordinary skill in the art, the container 159 may include other components that are not shown in Figures 2A and 2B for clarity and illustrative purposes (e.g., additional valves and hardware for refilling the container 159). The body 160 and upper portion 162 define an internal volume that can contain fluid. In this embodiment, the upper portion 162 is a lid coupled to the body 160. In other embodiments, the upper portion 162 can be an integral part of the body 160. The seal fitting member 164, like the seal fitting members 102a and 102b, is a portion of the seal fitting assembly 157 that secures the ultrasonic probe 100 to the container 159. In this exemplary embodiment, the components of the container 159 are composed of one or more metals.

Figure 2B shows a cross sectional view of the portion the ultrasonic probe 100 and container 159 within the dashed box of Figure 2A, taken along the line 2B-2B. As shown, a stem 168 is disposed in a hole in the upper portion 162 of the body 160 of the container 159. In this embodiment, the stem 168 is a face seal fitting gland that is bonded (e.g., welded) to the upper portion 162 of the body 160. The stem 168 comprises a protruding sealing surface 170, a lip 172, and a sidewall 174. The sidewall 174 of the stem 168 has an inner diameter D4 that is greater than the outer diameter D3 of the barrel 123 such that the barrel 123 can be inserted into the stem 168. The seal fitting member 164 is disposed around the stem 168 and comprises a threaded region 166 that engages the threaded region 152 of the seal fitting member 102b (i.e., the threaded regions 152 and 166 have complementary threading such as female and male threading, respectively). A metal gasket 176 having a through hole is disposed between the protruding sealing surface 150 of the seal fitting member 102a and the protruding sealing surface 170 of the stem 168.

In a fully installed configuration, the barrel 123 is inserted through the metal gasket 176 and the stem 168 such that the barrel is disposed inside of the container 159 and the neck tube is disposed within the stem 168 and the metal gasket 176. The threaded region 152 of the seal fitting member 102b is then threaded onto the threaded region 166 of the seal fitting member 164 such that the seal fitting member 102b engages (i.e., presses against) the lip 149 of the seal fitting member 102a, the seal fitting member 164 engages the lip 172 of the stem 168, and the metal gasket 176 is compressed between the protruding sealing surface 150 of the seal fitting member 102a and the protruding sealing surface 170 of the stem 168. In this manner, the protruding sealing surface 170, the protruding sealing surface 150, and the metal gasket 176 form a metal-on-metal seal that prevents fluid (i.e., liquid, vapor, and/or gas) from escaping or entering the container 159.

In the fully installed configuration, in this exemplary embodiment, a distance S1 exists between the sidewall 114 of the neck tube 108 and the sidewall 174 of the stem 168; a distance S2 exists between the upper portion 162 (i.e., lid) of the container 159 and the upper end 118 of the shoulder tube 116, and the upper end 118 of the shoulder tube 116 is located below the lower-most portion of the stem 168; and a distance S3 exists between the upper portion 162 of the container 159 and the upper end 124 of the outer tube 122 of the barrel 123. Preferably, the distance S2 is greater than or equal to 0.10 inches (2.5 mm) and the distance S1 is greater than or equal to 0.70 mm. Generally, the distances S1, S2 and S3 are preferably large enough to allow fluid to travel in between the sidewall 114 of the neck tube 108 and the sidewall 174 of the stem 168, but also drain back down and return into the container 159 under the force of gravity. Stated differently, the distances S1, S2 and S3 are preferably large enough to avoid capillary action in which fluid is retained between the sidewall 114 of the neck tube 108 and the sidewall 174 of the stem 168. Avoiding such capillary action helps maximize the usable quantity of chemical reagent that can be drawn out of the container 159 for use, and also ensures that during cleaning of the container 159 and the ultrasonic probe 100 in the fully installed configuration, no residual chemicals are left behind to potentially contaminate fresh chemical reagent that is later added to the container 159.

The ultrasonic probe 100 satisfies a need in the art for an ultrasonic probe having increased quantities of ultrasonic sensors that can be used with existing container fittings having standardized dimensions. The barrel 123 has an outer diameter D3 that provides an increased amount of space within the internal volume 146 that is necessary to house the increased number of ultrasonic sensors 156a through 1561 and their respective wiring 158. In prior art ultrasonic probe designs, the barrel typically extends into the seal fitting assembly. An increased outer diameter of the barrel would therefore require a larger and/or non-standard seal fitting assembly, or modifying a standard seal fitting assembly such as by boring out a through hole (e.g., through hole 103 of the seal fitting member 102a) so it can receive the larger barrel diameter. However, non-standard fitting assemblies are typically much more expensive than their standardized counterparts and may also require the use of other non-standardized components. Non-standard fitting assemblies also do not benefit from the extensive testing and proven history of standardized fitting assemblies for use in semiconductor manufacturing processes.

Larger seal fittings also require more space on the lid of the container (e.g., upper portion 162) and can make obtaining a tight seal more difficult. Finally, the inventors have found that attempts to modify standard seal fitting assemblies to receive a larger barrel diameter can negatively affect the structural integrity of the ultrasonic probe and/or the seal fitting assembly. For example, referring to Figure 1B, if the through hole 103 in the seal fitting member 102a was bored out to receive the larger outer diameter D2 instead of the outer diameter D2 of the neck tube 108, the distance D1 would be decreased. As a result, the size of the weld zone 148 would also be decreased, and the heat of welding could damage (i.e., warp) the protruding sealing surface 150 and negatively affect the integrity of the seal made between the protruding sealing surface 150 and the metal gasket 176.

Unlike prior art probe designs, the barrel 123 of the ultrasonic probe 100 does not extend into the seal fitting member 102a. Instead, the barrel 123 is coupled to the neck tube 108, which is in turn coupled to the seal fitting member 102a. The stem 168 is bored out such that the inner diameter D4 of the stem 168 is greater than the outer diameter D3 of the barrel 123 and the barrel 123 can be inserted into the stem 168. The neck tube 108 has an outer diameter D2 that is less than the outer diameter D3 of the barrel 123 (i.e., the ratio of D2 to D3 is less than one), which enables the through hole 103 of the seal fitting members 102a to have a smaller bore size, as opposed to requiring a larger seal fitting (e.g., a 1 inch seal fitting) or boring out the through hole 103 in the seal fitting member 102a to accommodate the increased outer diameter D3 of the barrel 123. The smaller outer diameter D2 of the neck tube 108 also provides the necessary distance D1 to have a sufficiently large weld zone 148 such that the neck tube 108 and the seal fitting member 102a can be welded together without welding material and/or welding heat impairing the protruding sealing surface 150. Preventing such damage to the protruding sealing surface 150 is critical to maintaining the integrity of the seal between the protruding sealing surface 150 and the metal gasket 176, and therefore maintaining the assay (purity) of the chemical reagent for use in semiconductor manufacturing.

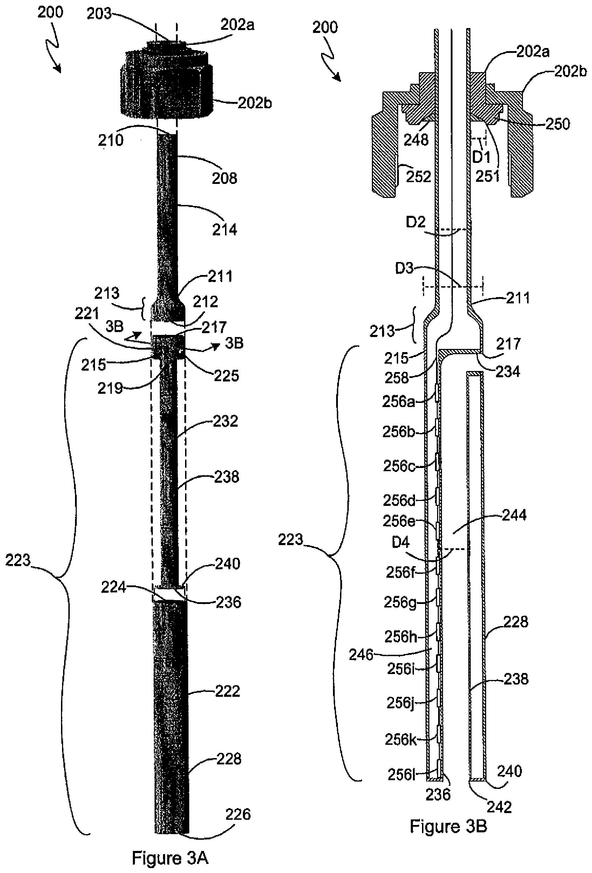

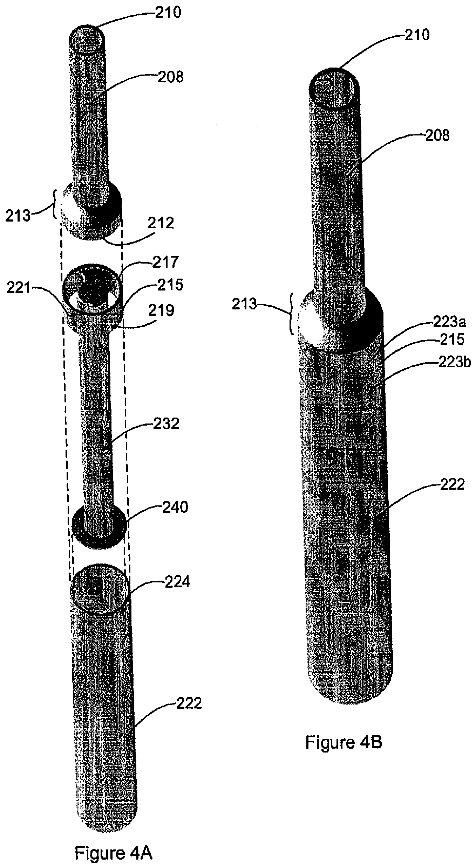

Figure 3A is an exploded perspective view of an ultrasonic probe 200 in accordance with another exemplary embodiment of the present invention. Figure 3B is a non-exploded sectional view of the ultrasonic probe 200 taken along line 3B-3B. Figure 4A is an exploded perspective view of certain components of the ultrasonic probe 200, and Figure 4B is a non-exploded perspective view of the components of the ultrasonic probe 200 shown in Figure 4A.

The ultrasonic probe 200 shares many similarities with the ultrasonic probe 100, but differs with respect to the construction of the neck tube 208 and the barrel 223. In this embodiment, the shoulder portion 213 of the neck tube 208 is formed by the sidewall 214 (rather than a separate piece, as is the case with shoulder tube 116 of ultrasonic probe 100) and is integral with the remainder of the neck tube 208 (i.e., the neck tube 208 and shoulder portion 213 are a single piece of material). The shoulder portion 213 has a bell shape that begins at the portion of the sidewall 214 indicated at 211 and transitions from the outer diameter D2 of the neck tube 208 to the outer diameter D3 of the neck tube 208, which is also the outer diameter of the barrel 223. The lower end 212 of the neck tube 208 also defines a lower opening having a diameter that is greater than the outer diameter D2 of the neck tube 208.

In this embodiment, the barrel 223 comprises a collar 215, an outer tube 222, an inner tube 232, and a disc cap 240. The collar 215 comprises upper end 217 defining an upper opening, a lower end 219 defining a lower opening, a sidewall 221, and a through hole 225 disposed in the sidewall 221.

Unlike the ultrasonic probe 100, the outer tube 222 of the ultrasonic probe 200 does not include a through hole disposed in the sidewall 228, and the upper end 224 of the outer tube 222 is not coupled to a shoulder tube or to the lower end 212 of the neck tube 208. Instead, the upper end 234 of the inner tube 232 is aligned with the through hole 225 disposed in the sidewall 221 of the collar 215, with the upper end 234 of the inner tube 232 being coupled to the sidewall 221 of the collar 215. The upper end 217 of the collar 215 is coupled to the lower end 212 of the neck tube 208, and the upper end 224 of the outer tube 222 is coupled to the lower end 219 of the collar 215. The disc cap 240 is coupled to the lower end 226 of the outer tube 222 and the lower end 236 of the inner tube 232, thereby coupling the lower end 226 of the outer tube 222 to the lower end 236 of the inner tube 232.

The collar 215 enables the barrel 223 to be constructed as one or more assemblies. This feature has been found to be advantageous because the barrel 223 can be partially assembled and the plurality of ultrasonic sensors 256 can be tested prior to completing assembly of the barrel 223 and enclosing the plurality of ultrasonic sensors 256 in the internal volume 246. In addition, this feature is advantageous because most of the components of the barrel 223 can be welded together prior to installing the plurality of ultrasonic sensors 256, where the heat from welding might otherwise damage the plurality of ultrasonic sensors 256 and/or the bonds which hold the plurality of ultrasonic sensors 256 in place within the internal volume 246.

In a preferred embodiment, for example, an assembly is first constructed comprising the collar 215, the inner tube 232, and the disc cap 240 by welding the upper end 234 of the inner tube 232 to the collar 215 and welding the lower end 236 of the inner tube 232 to the disc cap 240. The assembly is then coupled to the neck tube 208 by welding the upper end 217 of the collar 215 to the lower end 212 of the neck tube 208. The plurality of ultrasonic sensors 256 are then installed into the assembly by coupling the plurality of ultrasonic sensors 256 to the sidewall 238 (see Figure 3B) via epoxy or other known means of attachment. The wiring 258 (comprising at least one wire) that is coupled to each ultrasonic sensor of the plurality of ultrasonic sensors 256 is extended along the sidewall 238, through the collar 215, and through the shoulder portion 213 and remainder of the neck tube 208. The wiring 258 that is coupled to each ultrasonic sensor, like the wiring 158 of the ultrasonic probe 100, does not need to be individually shielded, and the wiring 258 can be implemented with a multi conductor shielded cable having separate inner conductors for each ultrasonic sensor and an outer shield that serves as a common return line and ground for all of the ultrasonic sensors of the plurality of ultrasonic sensors 256. At this point, the plurality of ultrasonic sensors 256 can be tested (e.g., by connecting them to a controller and providing electrical current), adjusted, and/or replaced while they are still easily accessible. Further, any welds whose heat might damage the ultrasonic sensors 256 and/or their bonds to the sidewall 238 have already been performed prior to installing the plurality of ultrasonic sensors 256.

Assembly of the barrel 223 can then be completed by coupling the outer tube 222 to the assembly. In this example, the outer tube 222 slides over the disc cap 240 and over the inner tube 232 until the upper end 224 of the outer tube 222 abuts the lower end 219 of the collar 215. The collar 215 is coupled to the neck tube 208 via a weld along a circumferential weld line 223a (see Figure 4B) and to the outer tube 222 via a weld along a circumferential weld line 223b, thereby enclosing the plurality of ultrasonic sensors 256 in the internal volume 246 defined between the sidewall 228 of the outer tube 222 and the sidewall 238 of the inner tube 232. The inventors have found that when welding along the circumferential weld lines 223a and 223b from the outside of the barrel 223, any heat generated within the internal volume 246 is not great enough to damage the plurality of ultrasonic sensors 256 and/or the bonds which hold the plurality of ultrasonic sensors 256 in place within the internal volume 246.

The ultrasonic probe 200 can be used in conjunction with the seal fitting assembly 157 to install the ultrasonic probe 200 on the container 159 in the manner previously discussed with regard to the ultrasonic probe 100. However, when the ultrasonic probe 200 is fully installed on the container 159, the equivalent distance S2 is measured between the upper portion 162 of the container 159 and the portion of the sidewall 214 indicated at 211 (i.e., the uppermost portion of the shoulder portion 213) rather than the upper end 118 of the shoulder tube 116, and the equivalent distance S3 is measured between the upper portion 162 of the container 159 and the upper end 217 of the collar 215 rather than the upper end of the outer tube 122.

While the principles of the invention have been described above in connection with preferred embodiments, it is to be clearly understood that this description is made only by way of example and not as a limitation of the scope of the invention.

## Claims

1. An ultrasonic probe (200) for use in level sensing within a container (159), the ultrasonic probe (200) comprising:
a barrel (223) having an outer diameter (D3) wherein the barrel (223) comprises:
a collar (215) having an upper opening (217), a lower opening (219), a sidewall (221), a side opening (225) disposed in the sidewall (221), and an outer diameter defined by the sidewall (221);
an outer tube (222) comprising an upper opening (224), a lower opening (226), a sidewall (228), and outer diameter (D3) defined by the sidewall (228); and an inner tube (232) comprising an upper opening (234), a lower opening (236), and a sidewall (238), the upper opening (234) of the inner tube (232) being aligned with the side opening (225) of the collar (215);
wherein the inner tube (232) defines a conduit (244) disposed within the barrel (223), the internal volume (246) is located between the sidewall (238) of the inner tube (232) and the sidewall (228) of the outer tube (222), the side opening (225) of the collar (215) is aligned with the upper opening (234) of the inner tube (232), and the collar (215) is positioned between the neck tube (208) and the outer tube (222); the ultrasonic probe (200) further comprising a neck tube (208) coupled to the barrel (223) and a portion of a fitting assembly (157), the neck tube (208) comprising a shoulder portion (213), a lower opening (212) defined by the shoulder portion (213), a side wall (214), and a first outer diameter (D2) defined by the sidewall (214), the first outer diameter (D2) of the neck tube (208) being less than the outer diameter (D3) of the barrel (223);
wherein the portion of the fitting assembly (157) comprises a first seal fitting member (202a/b) coupled to a portion of the neck tube (208), the first seal fitting member (202a/b) comprising a first threaded region (252) and a protruding sealing surface (250), the protruding sealing surface (250) of the first seal fitting member (202a/b) extending around the neck tube (208), the protruding sealing surface (250) of the first seal fitting member (202a/b) being separated from the sidewall (214) of the neck tube (208) by a first distance (D1);
the ultrasonic probe (200) further comprising an internal volume (246) disposed within the barrel (223), the internal volume (246) being isolated from the conduit (244); and
a plurality of ultrasonic sensors (256a-l) disposed within the internal volume (246), each ultrasonic sensor of the plurality of ultrasonic sensors (256a-l) having a wire (258) that extends from the internal volume (246) through the neck tube (208).

2. The ultrasonic probe (200) of claim 1, wherein the portion of the fitting assembly (157) comprises a sealing surface (250) having an inner edge (251), the inner edge (251) being located at least 2.0 mm from the sidewall (214) of the neck tube (208).

3. The ultrasonic probe (200) of claim 1 or claim 2, wherein the ratio of the first outer diameter (D2) of the neck tube (208) to the outer diameter (D3) of the barrel (223) is less than or equal to 0.95.

4. The ultrasonic probe (200) of any one of the preceding claims, wherein the upper opening (217) of the collar (215) is coupled to the lower opening (212) of the neck tube (208); the upper opening (224) of the outer tube (222) is coupled to the lower opening (219) of the collar (215); and
the inner tube (232) is coupled to the outer tube (222) and the collar (215), the lower opening (236) of the inner tube (236) being aligned with the lower opening (226) of the outer tube (222).

5. The ultrasonic probe (200) of any one of the preceding claims, wherein the lower opening (212) defined by the shoulder portion (213) of the neck tube (208) has a second outer diameter, the second outer diameter being greater than the first outer diameter (D2) of the neck tube (208).

6. The ultrasonic probe (200) of any one of the preceding claims, further comprising:
a second seal fitting member (164), the second seal fitting member (164) comprising a second threaded region (166), wherein the second threaded region (166) is adapted to engage the first threaded region (252); and
a gasket (176) having a through hole through which the neck tube (208) is disposed, the gasket (176) being adapted to be disposed between the protruding sealing surface (250) of the first seal fitting member (202a/b) and a protruding sealing surface (170) of the container (159).

7. A system comprising:
a container (159) for holding a liquid, the container (159) comprising:
a body (160) having an upper portion (162) and an internal volume; and
a stem (168) disposed in a hole in the upper portion (162) of the body (160), the stem (168) having an inner diameter (D4), a sidewall (174), a lip (172), and a protruding sealing surface (170); and
an ultrasonic probe (200) as claimed in any one of the preceding claims for measuring levels of liquid in the internal volume of the container (159), wherein the outer diameter (D3) of the barrel (223) of the ultrasonic probe is less than the inner diameter (D4) of the stem (168), the conduit (244) disposed within the barrel (223) is in flow communication with the internal volume of the body (160) of the container (159),
a portion of the neck tube (208) of the ultrasonic probe is disposed within the stem (168),
the internal volume (246) of the barrel (223) is isolated from the internal volume of the body (160) of the container (159), and
each ultrasonic sensor of the plurality of ultrasonic sensors (256a-l) of the ultrasonic probe is positioned and oriented to emit sound waves into at least a portion of the conduit (244).

8. A method of assembling a probe (200) as claimed in any one of claims 1 to 6, the method comprising:
(a) coupling the inner tube (232) to the collar (215);
(b) coupling the collar (215) to the neck tube (208);
(c) coupling the plurality of ultrasonic sensors (256a-l) to the sidewall (238) of the inner tube (232);
(d) only after performing steps (a) through (c), coupling the outer tube (222) to the collar (215), optionally via welding (223b), thereby creating the internal volume (246) between the inner tube (232) and the outer tube (222) that encloses the plurality of ultrasonic sensors (256a-l);
(e) prior to coupling the outer tube (222) to the collar (215), providing electrical current to one or more ultrasonic sensors of the plurality of ultrasonic sensors (256a-l) via one or more wires (258) extending from each of the plurality of ultrasonic sensors (256a-l), through the internal volume (246), through the collar (215), and through the neck tube (218).

9. The method of claim 8, wherein the upper opening (234) of the inner tube (232) is welded to the side opening (225) of the collar (215), the upper opening (217) of the collar (215) is welded (223a) to the lower opening (212) of the neck tube (208), and the lower opening (219) of the collar (215) is welded (223b) to the upper opening (224) of the outer tube (222).

10. The method of claim 8 or claim 9, further comprising:
(e) prior to coupling the outer tube (222) to the collar (215), connecting all ultrasonic sensors of the plurality of ultrasonic sensors (256a-l) to a controller (109) by a single multi conductor shielded cable; and/or
connecting a separate signal line that is not individually shielded to each ultrasonic sensor of the plurality of ultrasonic sensors (256a-l), and connecting each ultrasonic sensor of the plurality of ultrasonic sensors (256a-l) to a common return line.

11. A method of operating an ultrasonic probe as claimed in any one of Claims 1 to 6, the method comprising:
(a) sending an electronic signal to one of the plurality of ultrasonic sensors;
(b) receiving an electronic signal from the ultrasonic sensor of step (a);
(c) sending an electronic signal to another one of the of the plurality of ultrasonic sensors only after step (b) has been performed; and
(d) receiving an electronic signal from the ultrasonic sensor of step (c).

12. The method of Claim 11, further comprising the step of:
(e) repeating steps (a) through (d) so that steps (a) and (b) or steps (c) and (d) have been performed a first time for each ultrasonic sensor of the plurality of ultrasonic sensors.

13. The method of Claim 12, further comprising the step of:
(f) repeating steps (a) through (d) so that steps (a) and (b) or steps (c) and (d) have been performed a second time for each ultrasonic sensor of the plurality of ultrasonic sensors, wherein step (f) is performed only after step (e) has been performed.

14. The method of any of Claims 11 to 13, wherein electronic signals are sent to the plurality of ultrasonic sensors using a plurality of inner conductors of a multi conductor shielded cable, and wherein electronic signals are received from the plurality of ultrasonic sensors using an outer shield of the multi conductor shielded cable.

## Patentansprüche

1. Ultraschallsonde (200) zur Verwendung bei der Standabtastung in einem Behälter (159), die Ultraschallsonde (200) umfassend:
einen Zylinder (223) mit einem Außendurchmesser (D3), wobei der Zylinder (223) umfasst:
einen Bund (215) mit einer oberen Öffnung (217), einer unteren Öffnung (219), einer Seitenwand (221), einer seitlichen Öffnung (225), angeordnet in der Seitenwand (221), und einem Außendurchmesser, definiert durch die Seitenwand (221);
ein Außenrohr (222) umfassend eine obere Öffnung (224), eine untere Öffnung (226), eine Seitenwand (228), und einen Außendurchmesser (D3), definiert durch die Seitenwand (228); und
ein Innenrohr (232) umfassend eine obere Öffnung (234), eine untere Öffnung (236) und eine Seitenwand (238), wobei die obere Öffnung (234) des Innenrohrs (232) mit der seitlichen Öffnung (225) des Bunds (215) ausgerichtet ist;
wobei das Innenrohr (232) einen Kanal (244) definiert, der sich im Zylinder (223) befindet, sich das Innenvolumen (246) zwischen der Seitenwand (238) des Innenrohrs (232) und der Seitenwand (228) des Außenrohrs (222) befindet, die seitliche Öffnung (225) des Bunds (215) mit der oberen Öffnung (234) des Innenrohrs (232) ausgerichtet ist und der Bund (215) zwischen dem Stutzenrohr (208) und dem Außenrohr (222) positioniert ist; die Ultraschallsonde (200) ferner umfassend ein Stutzenrohr (208), das an den Zylinder (223) und an einen Abschnitt einer Anschlusseinheit (157) gekoppelt ist, das Stutzenrohr (208) umfassend einen Schulterabschnitt (213), eine untere Öffnung (212), definiert durch den Schulterabschnitt (213), eine Seitenwand (214) und einen ersten Außendurchmesser (D2), definiert durch die Seitenwand (214), wobei der erste Außendurchmesser (D2) des Stutzenrohrs (208) weniger als der Außendurchmesser (D3) des Zylinders (223) ist;
wobei der Abschnitt der Anschlusseinheit (157) ein erstes Dichtungsanschlusselement (202a/b) umfasst, das an einen Abschnitt des Stutzenrohrs (208) gekoppelt ist, das erste Dichtungsanschlusselement (202a/b) umfassend einen ersten Gewindebereich (252) und eine hervorstehende Dichtfläche (250), wobei sich die hervorstehende Dichtfläche (250) des ersten Dichtungsanschlusselements (202a/b) um das Stutzenrohr (208) erstreckt, die hervorstehende Dichtfläche (250) des ersten Dichtungsanschlusselements (202a/b) von der Seitenwand (214) des Stutzenrohrs (208) durch einen ersten Abstand (D1) getrennt ist;
die Ultraschallsonde (200) ferner umfassend ein Innenvolumen (246), angeordnet im Zylinder (223), wobei das Innenvolumen (246) von dem Kanal (244) isoliert ist; und
eine Vielzahl von Ultraschallsensoren (256a-l), angeordnet im Innenvolumen (246), wobei jeder Ultraschallsensor der Vielzahl von Ultraschallsensoren (256a-l) einen Draht (258) hat, der sich von dem Innenvolumen (246) durch das Stutzenrohr (208) erstreckt.

2. Ultraschallsonde (200) nach Anspruch 1, wobei der Abschnitt der Anschlusseinheit (157) eine Dichtfläche (250) mit einem Innenrand (251) hat, wobei sich der Innenrand (251) mindestens 2,0 mm von der Seitenwand (214) des Stutzenrohrs (208) befindet.

3. Ultraschallsonde (200) nach Anspruch 1 oder Anspruch 2, wobei das Verhältnis des ersten Außendurchmessers (D2) des Stutzenrohrs (208) zum Außendurchmesser (D3) des Zylinders (223) weniger als oder gleich 0,95 ist.

4. Ultraschallsonde (200) nach einem der vorherigen Ansprüche, wobei die obere Öffnung (217) des Bunds (215) an die untere Öffnung (212) des Stutzenrohrs (208) gekoppelt ist; die obere Öffnung (224) des Außenrohrs (222) an die untere Öffnung (219) des Bunds (215) gekoppelt ist; und
das Innenrohr (232) an das Außenrohr (222) und den Bund (215) gekoppelt ist, wobei die untere Öffnung (236) des Innenrohrs (236) mit der unteren Öffnung (226) des Außenrohrs (222) ausgerichtet ist.

5. Ultraschallsonde (200) nach einem der vorherigen Ansprüche, wobei die untere Öffnung (212) definiert durch den Schulterabschnitt (213) des Stutzenrohrs (208) einen zweiten Außendurchmesser hat, wobei der zweite Außendurchmesser größer als der erste Außendurchmesser (D2) des Stutzenrohrs (208) ist.

6. Ultraschallsonde (200) nach einem der vorherigen Ansprüche, ferner umfassend:
ein zweites Dichtungsanschlusselement (164), das zweite Dichtungsanschlusselement (164) umfassend einen zweiten Gewindebereich (166), wobei der zweite Gewindebereich (166) angepasst ist, um den ersten Gewindebereich (252) einzugreifen; und
eine Dichtung (176) mit einem Durchgangsloch, durch das das Stutzenrohr (208) angeordnet ist, wobei die Dichtung (176) angepasst ist, um zwischen der hervorstehenden Dichtfläche (250) des ersten Dichtungsanschlusselements (202a/b) und einer hervorstehenden Dichtfläche (170) des Behälters (159) angeordnet zu werden.

7. System, umfassend:
einen Behälter (159) zum Halten einer Flüssigkeit, der Behälter (159) umfassend:
einen Körper (160) mit einem oberen Abschnitt (162) und einem Innenvolumen; und
einen Schaft (168), angeordnet in einem Loch im oberen Abschnitt (162) des Körpers (160), wobei der Schaft (168) einen Innendurchmesser (D4), eine Seitenwand (174), eine Lippe (172), und eine hervorstehende Dichtfläche (170) hat; und
eine Ultraschallsonde (200) nach einem der vorherigen Ansprüche zum Messen von Flüssigkeitsständen im Innenvolumen des Behälters (159), wobei der Außendurchmesser (D3) des Zylinders (223) der Ultraschallsonde weniger als der Innendurchmesser (D4) des Schafts (168) ist, der im Zylinder (223) angeordnete Kanal (244) in Durchflusskommunikation mit dem Innenvolumen des Körpers (160) des Behälters (159) ist,
ein Abschnitt des Stutzenrohrs (208) der Ultraschallsonde im Schaft (168) angeordnet ist,
das Innenvolumen (246) des Zylinders (223) vom Innenvolumen des Körpers (160) des Behälters (159) isoliert ist, und
jeder Ultraschallsensor der Vielzahl von Ultraschallsensoren (256a-l) der Ultraschallsonde positioniert und ausgerichtet ist, um Schallwellen in mindestens einen Abschnitt des Kanals (244) zu emittieren.

8. Verfahren zum Zusammensetzen einer Sonde (200) nach einem der Ansprüche 1 bis 6, das Verfahren umfassend:
(a) Koppeln des Innenrohrs (232) an den Bund (215);
(b) Koppeln des Bunds (215) an das Stutzenrohr (208);
(c) Koppeln der Vielzahl von Ultraschallsensoren (256a-l) an die Seitenwand (238) des Innenrohrs (232);
(d) erst nach Ausführen der Schritte (a) bis (c), Koppeln des Außenrohrs (222) an den Bund (215), optional durch Schweißen (223b), wodurch das Innenvolumen (246) zwischen dem Innenrohr (232) und dem Außenrohr (222) geschaffen wird, das die Vielzahl von Ultraschallsensoren (256a-l) umschließt;
(e) vor einem Koppeln des Außenrohrs (222) an den Bund (215), Bereitstellen von elektrischem Strom zu einem oder mehreren Ultraschallsensoren der Vielzahl von Ultraschallsensoren (256a-l) über einen oder mehrere Drähte (258), die sich von jedem der Vielzahl von Ultraschallsensoren (256a-l) durch das Innenvolumen (246), durch den Bund (215) und durch das Stutzenrohr (218) erstrecken.

9. Verfahren nach Anspruch 8, wobei die obere Öffnung (234) des Innenrohrs (232) an die seitliche Öffnung (225) des Bunds (215) geschweißt wird, die obere Öffnung (217) des Bunds (215) an die untere Öffnung (212) des Stutzenrohrs (208) geschweißt (223a) wird, und die untere Öffnung (219) des Bunds (215) an die obere Öffnung (224) des Außenrohrs (222) geschweißt (223b) wird.

10. Verfahren nach Anspruch 8 oder Anspruch 9, ferner umfassend:
(e) vor einem Koppeln des Außenrohrs (222) an den Bund (215), Verbinden aller Ultraschallsensoren der Vielzahl von Ultraschallsensoren (256a-l) mit einer Steuereinheit (109) durch ein einzelnes abgeschirmtes Mehrfachleiterkabel; und/oder
Verbinden einer separaten Signalleitung, die nicht individuell abgeschirmt ist, mit jedem Ultraschallsensor der Vielzahl von Ultraschallsensoren (256a-l), und Verbinden von jedem Ultraschallsensor der Vielzahl von Ultraschallsensoren (256a-l) mit einer gemeinsamen Rücklaufleitung.

11. Verfahren zum Betreiben einer Ultraschallsonde nach einem der Ansprüche 1 bis 6, das Verfahren umfassend:
(a) Senden eines elektronischen Signals zu einem der Vielzahl von Ultraschallsensoren;
(b) Empfangen eines elektronischen Signals von dem Ultraschallsensor von Schritt (a);
(c) Senden eines elektronischen Signals zu einem anderen der Vielzahl von Ultraschallsensoren erst nachdem Schritt (b) ausgeführt wurde; und
(d) Empfangen eines elektronischen Signals von dem Ultraschallsensor von Schritt (c).

12. Verfahren nach Anspruch 11, ferner umfassend den folgenden Schritt:
(e) Wiederholen der Schritte (a) bis (d), sodass die Schritte (a) und (b) oder die Schritte (c) und (d) ein erstes Mal für jeden Ultraschallsensor der Vielzahl von Ultraschallsensoren ausgeführt wurde.

13. Verfahren nach Anspruch 12, ferner umfassend den folgenden Schritt:
(f) Wiederholen der Schritte (a) bis (d), sodass die Schritte (a) und (b) oder die Schritte (c) und (d) ein zweites Mal für jeden Ultraschallsensor der Vielzahl von Ultraschallsensoren ausgeführt wurde, wobei Schritt (f) erst nach Ausführen von Schritt (e) ausgeführt wird.

14. Verfahren einem der Ansprüche 11 bis 13, wobei elektronische Signale unter Verwendung von inneren Leitern eines abgeschirmten Mehrfachleiterkabels zu der Vielzahl von Ultraschallsensoren gesendet werden, und wobei elektronische Signale von der Vielzahl von Ultraschallsensoren unter Verwendung einer äußeren Abschirmung des abgeschirmten Mehrfachleiterkabels empfangen werden.

## Revendications

1. Sonde ultrasonique (200) utilisée pour la détection du niveau dans un récipient (159), la sonde ultrasonique (200) comprenant :
un tambour (223) avec un diamètre extérieur (D3), le tambour (223) comprenant :
un collet (215) possédant une ouverture supérieure (217), une ouverture inférieure (219), une paroi latérale (221), une ouverture latérale (225) disposée dans la paroi latérale (221), et un diamètre extérieur défini par la paroi latérale (221) ;
un tube extérieur (222) comprenant une ouverture supérieure (224), une ouverture inférieure (226), une paroi latérale (228), et un diamètre extérieur (D3) défini par la paroi latérale (228) ; et
un tube intérieur (232) comprenant une ouverture supérieure (234), une ouverture inférieure (236), et une paroi latérale (238), l'ouverture supérieure (234) du tube intérieur (232) étant alignée avec l'ouverture latérale (225) du collet (215) ;
le tube extérieur (232) définissant un conduit (244) disposé dans le cylindre (223), le volume interne (246) étant situé entre la paroi latérale (238) du tube intérieur (232) et la paroi latérale (238) du tube extérieur (222), l'ouverture latérale (225) du collet (215) étant alignée avec l'ouverture supérieure (234) du tube intérieur (232), et le collet (215) étant positionné entre le tube à col (208) et le tube extérieur (222) ;
la sonde ultrasonique (200) comprenant en outre un tube à col (208) couplé au cylindre (223) et à une partie du raccord (157), le tube à col (208) comprenant un épaulement (213), une ouverture inférieure (212) étant définie par l'épaulement (213), une paroi latérale (214), et un premier diamètre extérieur (D2) défini par la paroi latérale (214), le premier diamètre extérieur (D2) du tube à col (208) étant inférieur au diamètre extérieur (D3) du cylindre (223) ;
la partie du raccord (157) comprenant un premier raccord d'étanchéité (202a/b) couplé à une partie du tube à col (208), le premier raccord d'étanchéité (202a/b) comprenant une première zone filetée (252) et une surface d'étanchéité saillante (250), la surface d'étanchéité saillante (250) du premier raccord d'étanchéité (202a/b) s'étendant autour du tube à col (208), la surface d'étanchéité saillante (250) du premier raccord d'étanchéité (202a/b) étant séparée de la paroi latérale (214) du tube à col (208) par une première distance (D1) ;
la sonde ultrasonique (200) comprenant en outre un volume interne (246) disposé au sein du cylindre (223), le volume interne (246) étant isolé du conduit (244) ; et
une pluralité de capteurs ultrasoniques (256a-l) disposés dans le volume interne (246), chaque capteur ultrasonique de la pluralité de capteurs ultrasoniques (256a-l) possédant un fil métallique (258) déployé depuis le volume interne (246) et traversant le tube à col (208).

2. Sonde ultrasonique (200) selon la revendication 1, la partie du raccord (157) comprenant une surface d'étanchéité (250) possédant un bord intérieur (251), le bord intérieur (251) étant situé à au moins 2,0 mm de la paroi latérale (214) du tube à col (208).

3. Sonde ultrasonique (200) selon la revendication 1 ou la revendication 2, le rapport du premier diamètre extérieur (D2) du tube à col (208) sur le diamètre extérieur (D3) du cylindre (223) étant inférieur ou égal à 0,95.

4. Sonde ultrasonique (200) selon une quelconque des revendications précédentes, l'ouverture supérieure (217) du collet (215) étant couplée à l'ouverture inférieure (212) du tube à col (208) ; l'ouverture supérieure (224) du tube extérieur (222) étant couplée à l'ouverture inférieure (219) du collet (215) ; et
le tube extérieur (232) étant couplé au tube extérieur (222) et au collet (215), l'ouverture inférieure (236) du tube intérieur (236) étant alignée avec l'ouverture inférieure (226) du tube extérieur (222).

5. Sonde ultrasonique (200) selon une quelconque des revendications précédentes, l'ouverture inférieure (212) définie par l'épaulement (213) du tube à col (208) présentant un deuxième diamètre extérieur, le deuxième diamètre extérieur étant supérieur au premier diamètre extérieur (D2) du tube à col (208).

6. Sonde ultrasonique (200) selon une quelconque des revendications précédentes, comprenant en outre :
un deuxième raccord d'étanchéité (164), le deuxième raccord d'étanchéité (164) comprenant une deuxième zone filetée (166), la deuxième zone filetée (166) étant adaptée pour engager la première zone filetée (252) ; et
un joint (176) possédant un trou traversant dans lequel est disposé le tube à col (208), le joint (176) étant adapté pour être agencé entre la surface d'étanchéité saillante (250) du premier raccord d'étanchéité (202a/b) et une surface d'étanchéité saillante (170) du récipient (159).

7. Système, comprenant :
un récipient (159) pour contenir un liquide, le récipient (159) comprenant :
un corps (160) possédant une partie supérieure (162) et un volume interne ; et
une tige (168) disposée dans un trou dans la partie supérieure (162) du corps (160), la tige (168) possédant un diamètre intérieur (D4), une paroi latérale (174), une lèvre (172), et une surface d'étanchéité saillante (170) ; et
une sonde ultrasonique (200) selon une quelconque des revendications précédentes pour mesurer des niveaux de liquide dans le volume interne du récipient (159), le diamètre extérieur (D3) du cylindre (223) de la sonde ultrasonique étant inférieur au diamètre intérieur (D4) de la tige (168), le conduit (244) agencé au sein du tambour (223) étant en communication fluidique avec le volume interne du corps (160) du récipient (159),
une partie du tube à col (208) de la sonde ultrasonique étant agencée au sein de la tige (168),
le volume interne (246) du tambour (223) étant isolé du volume interne du corps (160) du récipient (159), et
chaque capteur ultrasonique de la pluralité de capteurs ultrasoniques (256a-l) de la sonde ultrasonique étant positionné et orienté de façon à émettre des ondes sonores dans au moins une partie du conduit (244).

8. Méthode d'assemblage d'une sonde (200) selon une quelconque des revendications 1 à 6, la méthode comprenant :
(a) le couplage du tube intérieur (232) au collet (215) ;
(b) le couplage du collet (215) au tube à col (208) ;
(c) le couplage de la pluralité de capteurs ultrasoniques (256a-l) à la paroi latérale (238) du tube intérieur (232) ;
(d) le couplage du tube extérieur (222) au collet (215), seulement après l'exécution des étapes (a) à (c), en option par soudage (223b), en créant ainsi le volume interne (246) entre le tube intérieur (232) et le tube extérieur (222) englobant la pluralité de capteurs ultrasoniques (256a-l) ;
(e) préalablement au couplage du tube extérieur (222) au collet (215), fourniture du courant électrique à un ou plusieurs capteurs ultrasoniques de la pluralité de capteurs ultrasoniques (256a-l) à travers un ou plusieurs câbles métalliques (258) s'étendant depuis chacun de la pluralité de capteurs ultrasoniques (256a-l), à travers le volume interne (246), le collet (215), et le tube à col (218).

9. Méthode selon la revendication 8, l'ouverture supérieure (234) du tube intérieur (232) étant soudée sur l'ouverture latérale (225) du collet (215), l'ouverture supérieure (217) du collet (215) étant soudée (223a) sur l'ouverture inférieure (212) du tube à col (208), et l'ouverture inférieure (219) du collet (215) étant soudée (223b) sur l'ouverture supérieure (224) du tube extérieur (222).

10. Méthode selon la revendication 8 ou la revendication 9, comprenant en outre :
(e) préalablement au couplage du tube extérieur (222) au collet (215), en connectant tous les capteurs ultrasoniques de la pluralité des capteurs ultrasoniques (256a-l) à un contrôleur (109) à l'aide d'un câble multiconducteurs blindé unique ; et/ou
connexion d'une ligne de signal distincte, qui n'est pas blindée individuellement, à chaque capteur ultrasonique de la pluralité des capteurs ultrasoniques (256a-l), et connexion de chaque capteur ultrasonique de la pluralité des capteurs ultrasoniques (256a-l) à une ligne de retour commune.

11. Méthode d'utilisation d'une sonde électronique selon une quelconque des revendications 1 à 6, la méthode comprenant :
(a) l'envoi d'un signal électronique à un de la pluralité de capteurs ultrasoniques ;
(b) la réception d'un signal électronique d'un capteur ultrasonique de l'étape (a) ;
(c) l'envoi d'un signal électronique à un autre de la pluralité de capteurs ultrasoniques, seulement après l'exécution de l'étape (b) ; et
(d) la réception d'un signal électronique d'un capteur ultrasonique de l'étape (c).

12. Méthode selon la revendication 11, comprenant en outre l'étape suivante :
(e) répétition des étapes (a) à (d) de sorte que les étapes (a) et (b) ou (c) et (d) aient été effectuées une première fois pour chaque capteur ultrasonique de la pluralité des capteurs ultrasoniques.

13. Méthode selon la revendication 12, comprenant en outre l'étape suivante :
(f) répétition des étapes (a) à (d) de sorte que les étapes (a) et (b) ou (c) et (d) aient été effectuées une deuxième fois pour chaque capteur ultrasonique de la pluralité des capteurs ultrasoniques, l'étape (f) n'étant effectuée qu'après l'exécution de l'étape (e).

14. Méthode selon une quelconque des revendications 11 à 13, des signaux électroniques étant envoyés à la pluralité de capteurs ultrasoniques en utilisant une pluralité de conducteurs internes d'un câble multiconducteurs blindé, et des signaux électroniques étant reçus de la pluralité de capteurs ultrasoniques en utilisant un blindage extérieur du câble multiconducteurs blindé.
